# EUROPÄISCHE PATENTSCHRIFT

(11) **EP 1 737 558 B1**
(45) Veröffentlichungstag und Bekanntmachung des Hinweises auf die Patenterteilung: **09.07.2008**
(21) Anmeldenummer: 05730048.5
(22) Anmeldetag: 15.04.2005
(51) Int. Cl.: B01D 53/26, B60T 17/00, B01D 45/14, B01D 50/00

(54) **LUFTAUFBEREITUNGSANLAGE MIT ÖLABSCHEIDER UND DRUCKLUFTVERSORGUNGSANLAGE**
AIR PURIFIER UNIT WITH OIL SEPARATOR AND COMPRESSED AIR PROVIDER UNIT
INSTALLATION DE TRAITEMENT D'AIR COMPORTANT UN SEPARATEUR D'HUILE, ET INSTALLATION D'ALIMENTATION EN AIR COMPRIME

(30) Priorität: 15.04.2004 DE 102004018792
(43) Veröffentlichungstag der Anmeldung: 03.01.2007
(73) Patentinhaber: KNORR-BREMSE SYSTEME FÜR NUTZFAHRZEUGE GMBH, 80809 München (DE)
(72) Erfinder: SOVÁGÓ, Szabolcs, H-6000 Kecskemét (HU); KÁDÁR, Lehel, H-1222 Budapest (HU); VARGA, Ferenc, H-1117 Budapest (HU)
(74) Vertreter: Mattusch, Gundula
(86) Internationale Anmeldenummer: PCT/EP2005/003979
(87) Internationale Veröffentlichungsnummer: WO 2005/099871

(56) Entgegenhaltungen:
- EP-A- 0 436 973
- EP-A- 0 919 271
- DE-B- 1 172 798

## Beschreibung

Die Erfindung betrifft eine Luftaufbereitungsanlage mit einem Ölabscheider sowie eine Druckluftversorgungsanlage.

Luftaufbereitungsanlagen dienen in erster Linie dazu, die von einem Kompressor gelieferte Druckluft zu entfeuchten, bevor diese den Druckluftverbrauchern, insbesondere einer Bremsanlage, zugeführt wird. Da die vom Kompressor gelieferte Luft verschmutzt ist, ist es erwünscht, diese zu reinigen, bevor sie der Filtereinheit zugeführt wird; auf diese Weise soll eine Verschmutzung der Filtereinheit verzögert werden. Die von dem Kompressor gelieferte Druckluft ist beispielsweise mit in dem Kompressor als Schmiermittel verwendetem Öl verschmutzt; weitere Verschmutzungen stammen beispielsweise aus der Atmosphäre. Es ist bekannt, zur Entfernung derartiger und anderer Verschmutzungen einen sogenannten Ölabscheider einzusetzen, den die Druckluft vor ihrem Eintritt in die Filtereinheit durchströmen muss.

Ein Beispiel für eine solche Reinigungseinrichtung ist in der US 6,071,321 angegeben. Die dort angegebenen oder in vergleichbarer Weise aufgebauten Ölabscheider arbeiten im Allgemeinen mit Hilfe der Zentrifugalkraft. Ein Luftstrom wird einer im Wesentlichen zylindrischen Kammer mit tangentialer Komponente zugeführt, so dass durch die Zentrifugalkraft von der Luft mitgeführte Partikel entsprechend ihrer höheren Masse nach außen getrieben werden und diese sich letztlich an der Wand der Kammer abscheiden. Die Partikel können dann am Boden der Kammer gesammelt und von dort abgeführt werden.

Generell ist man bestrebt, möglichst viele Funktionen, die eine Druckluftaufbereitungsanlage erfüllen muss, in wenige Komponenten zu integrieren. Demgemäß wurde in der US 6,071,321 bereits vorgeschlagen, den Ölabscheider an der Filtereinheit anzubauen. Moderne Luftaufbereitungsanlagen des Standes der Technik erfüllen gemäß dem erwähnten Integrationswunsch zusätzlich zu den Aufgaben im Hinblick auf die Filterung der Druckluft weiterhin solche Aufgaben, die mit der Druckregelung und der Absicherung der Druckluftverbraucherkreise in Verbindung stehen. Insofern sind zentrale Komponenten einer Luftaufbereitungsanlage neben der Filtereinheit ein Druckregler und ein Mehrkreisschutzventil, wobei der Druckregler und das Mehrkreisschutzventil in einem Ventilgehäuse angeordnet sind.

Der vorliegenden Erfindung liegt die Aufgabe zugrunde, eine Luftaufbereitungsanlage mit integriertem Ölabscheider und eine Druckluftversorgungsanlage zur Verfügung zu stellen, wobei der Ölabscheider im Hinblick auf seine Funktionsweise verbessert sein soll.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Luftaufbereitungsanlage dadurch auf, dass der Ölabscheider einen ersten Raum und einen zweiten Raum aufweist, die als im Wesentlichen axialsymmetrische Ringräume mit gemeinsamer Achse ausgelegt sind, dass in den ersten Raum zu reinigende Druckluft einleitbar ist, wobei in dem ersten Raum Luftleitmittel angeordnet sind, durch die die Strömungsgeschwindigkeit der durchströmenden Luft änderbar ist, und dass dem zweiten Raum in dem ersten Raum gereinigte Luft zuführbar ist, wobei über den zweiten Raum die gereinigte Luft einer Filtereinheit zuführbar ist. Durch die Luftleitmittel kann die Abscheidung von Fremdpartikeln unterstützt werden. Indem die Druckluft mit wechselnden Geschwindigkeiten durch den Ölabscheider strömt, können frühzeitige Zusammenlagerungen derartiger Partikel erfolgen. Solche Zusammenlagerungen erhöhen die Masse der Partikel, was deren Transport an die Außenseite des Ölabscheiders aufgrund der Zentrifugalkraft begünstigt. Getrennt von dem mit den Luftleitmitteln ausgestatteten Raum ist ein weiterer Raum vorgesehen, über den die gereinigte Luft dann der Filtereinheit zugeführt werden kann; eine direkte Verbindung der Filtereinheit mit dem die Verunreinigungen führenden ersten Raum ist somit nicht erforderlich.

Es ist besonders bevorzugt, dass der erste Raum und der zweite Raum als im Wesentlichen axialsymmetrische Ringräume mit gemeinsamer Achse ausgelegt sind. Insofern durchströmt die zu reinigende Luft zunächst einen radial außenliegenden Ringraum, bevor sie in gereinigter Form über den radial innenliegenden Ringraum der Filtereinheit zugeführt wird.

Es ist besonders nützlich, dass die Druckluft dem ersten Raum mit tangentialer Komponente zuführbar ist. Die tangentiale Komponente innerhalb des ersten Raums ist erforderlich, um die Zentrifugalkraft für eine Abscheidung der Verunreinigungen auszunutzen. Wenngleich die tangentiale Komponente grundsätzlich allein durch die im ersten Raum angeordneten Luftleitmittel erzeugt werden kann, ist es doch nützlich, die Druckluft dem ersten Raum von vornherein mit tangentialer Komponente zuzuführen.

Im Hinblick auf die konstruktive Auslegung der erfindungsgemäßen Luftaufbereitungsanlage ist insbesondere bevorzugt, dass die Luftleitmittel mehrere Luftleitelemente aufweisen, deren Hauptebenen an verschiedenen Axialkoordinaten angeordnet sind, dass die Luftleitelemente Luftführungsabschnitte aufweisen, die sich aus deren jeweiliger Hauptebene heraus erstrecken, und dass benachbarte Luftführungsabschnitte benachbarter Luftleitelemente nicht parallel sind.

Derartige Luftleitelemente sind in einfacher Weise herzustellen, beispielsweise indem kreisringartige Elemente gestanzt werden und dann in entsprechender Weise gebogen werden. Durch die nicht parallele Anordnung benachbarter Luftführungsabschnitte entstehen auf dem im Wesentlichen spiralartigen Weg der Luft durch den ersten Raum Strömungsengpässe und solche Bereiche, in denen ein großer Strömungsquerschnitt zur Verfügung steht. Insofern ergeben sich Geschwindigkeitsänderungen, die in vorteilhafter Weise die Zusammenlagerung der Partikel begünstigen.

Nützlicherweise ist vorgesehen, dass der Winkel zwischen Luftführungsabschnitten und Hauptebenen zwischen 10 und 20 Grad, vorzugsweise 15 Grad beträgt.

Gemäß einer ebenfalls besonders bevorzugten Ausführungsform der vorliegenden Erfindung ist diese dadurch weitergebildet, dass die Luftleitelemente zumindest teilweise identisch ausgebildet sind, wobei die Nichtparallelität der Luftführungsabschnitte benachbarter Luftleitelemente durch eine relative Verdrehung der Luftleitelemente gegeneinander realisiert ist. Es ist demnach möglich, identische Luftleitelemente zu verwenden, was die Herstellung des Ölabscheiders besonders kostengünstig und zuverlässig gestaltet. Allein durch die relative Verdrehung der Luftleitelemente gegeneinander ist es möglich, die Strömungsquerschnitte auf dem Strömungsweg der Druckluft durch den ersten Raum zu variieren.

Es ist besonders bevorzugt, dass der Innendurchmesser der Luftleitelemente dem Außendurchmesser einer im Wesentlichen zylindrischen Wand entspricht, die den ersten Raum von dem zweiten Raum trennt. Auf diese Weise können die Luftleitelemente form- und/oder kraftschlüssig auf die zylindrische Wand aufgesetzt werden, wobei zusätzliche Befestigungsmittel zwischen den Luftleitelementen und der zylindrischen Wand vorgesehen sein können.

Es ist weiterhin besonders bevorzugt, dass der erste Raum einen Bodenbereich aufweist, in dem abgeschiedenes Öl gesammelt wird und an dem ein Ablass zur Entnahme des gesammelten Öls angeordnet ist. Das abgeschiedene Öl beziehungsweise, allgemeiner formuliert, die abgeschiedenen Verunreinigungen sammeln sich somit im ersten Raum an einer Stelle, von der aus das gesammelte Öl direkt abgelassen werden kann.

In diesem Zusammenhang ist es besonders nützlich, dass die im Wesentlichen zylindrische Wand im Bodenbereich des ersten Raums gestuft ausgebildet ist. Eine solche gestufte Ausbildung der zylindrischen Wand im Bodenbereich des ersten Raums verhindert ein Heraufkriechen des Öls innerhalb des ersten Raums beziehungsweise ein Herüberkriechen des Öls von dem ersten Raum in den zweiten Raum. Auf diese Weise wird eine erneute Verschmutzung der durch den zweiten Raum strömenden Druckluft vermieden.

Aus vergleichbaren Gründen ist vorgesehen, dass der Übergang zwischen dem ersten Raum und dem zweiten Raum durch mindestens ein in den ersten Raum hineinragendes Rohr gebildet ist, das an seiner Außenseite mindestens einen kragenartigen Fortsatz hat. Der kragenartige Fortsatz beziehungsweise die vorzugsweise mehreren kragenartigen Fortsätze verhindern ebenfalls ein Kriechen von Öl aus dem ersten in den zweiten Raum.

Die Erfindung betrifft weiterhin eine Druckluftversorgungsanlage mit einer erfindungsgemäßen Luftaufbereitungsanlage.

Die erfindungsgemäße Druckluftversorgungsanlage ist in besonders bevorzugter Weise dadurch weitergebildet, dass der Ölabscheider einen Ablass aufweist, der zum Abführen von abgeschiedenen Substanzen mit einer im Zusammenhang mit einer Regeneration einer Filtereinheit verwendeten Ablassöffnung der Luftaufbereitungsanlage gekoppelt ist. Gattungsgemäße Luftaufbereitungsanlagen weisen zur Regeneration der Filtereinheit eine Ablassöffnung auf. Zur Regeneration der Luftfiltereinheit durchströmt Luft aus dem Vorratsbehältern des Nutzfahrzeugs die Filtereinheit in umgekehrte Richtung, und die Luft verlässt die Luftaufbereitungsanlage dann über eine Ablassöffnung. Erfindungsgemäß kann nun vorgesehen sein, diese Ablassöffnung auch dazu zu verwenden, die im Ölabscheider abgeschiedenen Substanzen aus diesem zu entnehmen. Dabei ist unter Umständen sicherzustellen, dass die häufig im Hinblick auf die Umwelt problematischen Substanzen, die sich im Ölabscheider ansammeln, nicht ohne Weiteres in die Atmosphäre ausgeblasen werden.

Die Erfindung wir nun mit Bezug auf die begleitenden Zeichnungen anhand besonders bevorzugter Ausführungsformen beispielhaft erläutert.

Dabei zeigen:
- Figur 1: eine perspektivische Darstellung einer erfindungsgemäßen Luftaufbereitungsanlage;
- Figur 2: eine Seitenansicht des Inneren eines Ölabscheiders;
- Figur 3: eine seitliche Schnittansicht eines Ölabscheiders;
- Figur 4: eine perspektivische Darstellung eines Luftleitelementes; und
- Figur 5: eine schematische Darstellung einer erfindungsgemäßen Druckluftversorgungsanlage.

Bei der nachfolgenden detaillierten Beschreibung der Erfindung anhand der beigefügten Zeichnungen bezeichnen gleiche Bezugszeichen gleiche oder vergleichbare Komponenten.

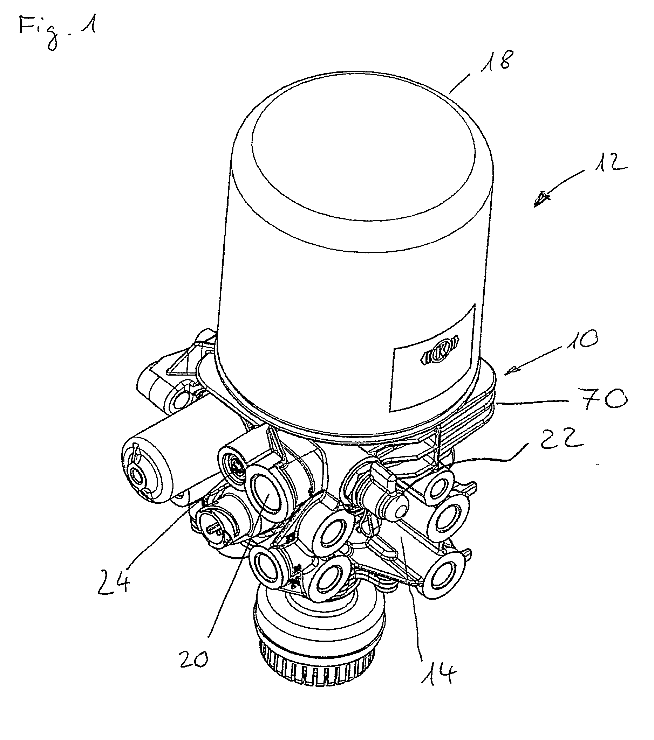

Figur 1 zeigt eine perspektivische Darstellung einer erfindungsgemäßen Luftaufbereitungsanlage. Die erfindungsgemäße Luftaufbereitungsanlage 12 umfasst eine als Trocknerkartusche ausgebildete Filtereinheit 18, ein Ventilgehäuse 14 und einen integrierten Ölabscheider 10. Der Ölabscheider 10 hat einen Eingangsanschluss 20, über den dem Ölabscheider 10 und damit der Luftaufbereitungsanlage 12 Druckluft von einem Kompressor zuführbar ist. So kann dem Ölabscheider 10 die zu reinigende Druckluft auf kürzestem Weg zugeführt werden. An dem Ölabscheider 10 ist ein weiterer Anschluss 22 vorgesehen, der als Fremdbefüllungs-Eingangsanschluss sowie als Reifenbefüllungs-Ausgangsanschluss verwendet werden kann. Diesem kann von einer beispielsweise fahrzeugexternen Quelle zu reinigende Druckluft zugeführt oder ungereinigte Druckluft für beliebige Zwecke, beispielsweise für die Reifenbefüllung, entnommen werden. Ferner ist ein Sicherheitsventil 24 vorgesehen. An der Außenseite des Gehäuses 60 des Ölabscheiders 10 sind Kühlrippen 70 vorgesehen, die der Abfuhr von Wärme aus dem Ölabscheider dienen.

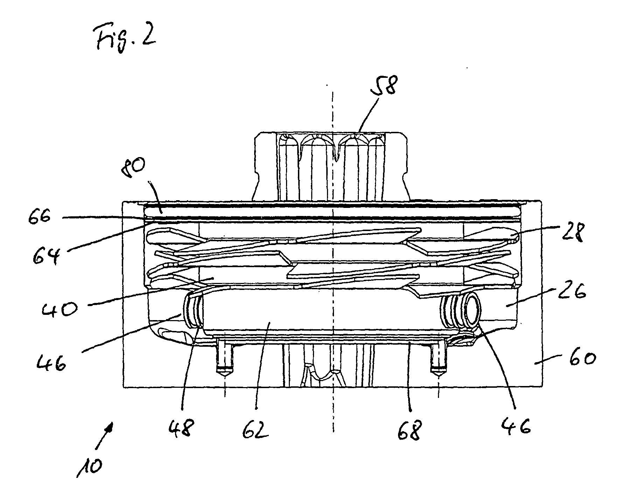

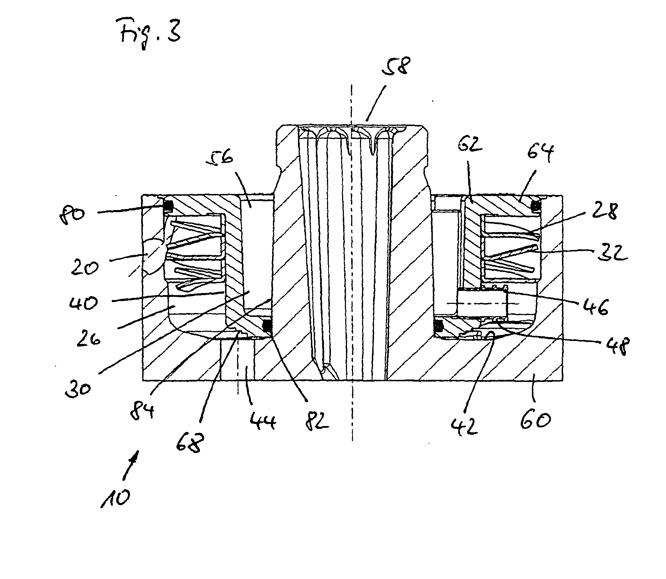

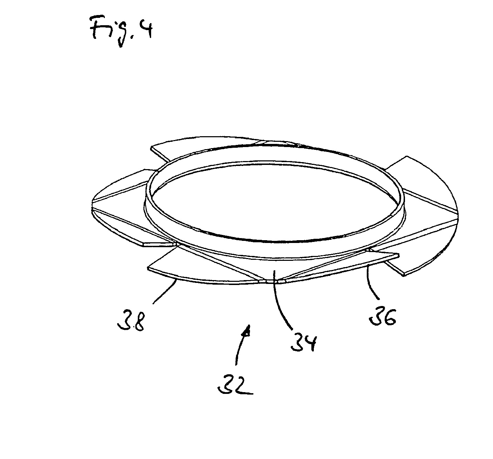

Figur 2 zeigt eine Seitenansicht des Inneren eines Ölabscheiders. Figur 3 zeigt eine seitliche Schnittansicht eines Ölabscheiders. Figur 4 zeigt eine perspektivische Darstellung eines Luftleitelementes. Im Inneren des Ölabscheiders 10 sind ein erster Raum 26 und ein zweiter Raum 30 vorgesehen, die über Rohre 46 miteinander in Verbindung stehen. In dem ersten Raum 26 sind Luftleitmittel 28 angeordnet. Im Betrieb der Luftaufbereitungsanlage 12 wird dem Ölabscheider 10 über den Eingangsanschluss 20 Druckluft zugeführt. Die Druckluft gelangt zunächst in den ersten Raum 26 des Ölabscheiders 10, wobei der Luft sogleich beim Einströmen in den ersten Raum 26 eine tangentiale Strömungskomponente vermittelt wird. Durch die Zentrifugalkraft werden Verschmutzungen zur Innenwand des Gehäuses 60 getrieben. Die Verschmutzungen sammeln sich dann im Bodenbereich 42 des ersten Raums 26. Im Bodenbereich 42 des ersten Raums 26 ist ein Ablass 44 zur Entnahme der abgeschiedenen Verschmutzungen vorgesehen. Die Druckluft kann aus dem ersten Raum 26 über die Rohre 46 in den zweiten Raum 30 überströmen, von wo sie über Auslassöffnungen 56 in die Filtereinheit eintreten kann. Nach Trocknung der Druckluft in der Filtereinheit strömt diese über einen zentralen Strömungspfad 58 des Ölabscheiders 10 in die Ventileinheit, von wo sie auf die verschiedenen Verbraucherkreise in bekannter Weise verteilt wird.

In dem Gehäuse 60 des Ölabscheiders 10 ist ein Einsatz 62 vorgesehen, der eine zylindrische Wand 40 und einen sich von dieser Wand 40 erstreckenden Kragen 64 aufweist. Der Einsatz 62 ist über Schraubverbindungen 80 an dem Gehäuse befestigt. Der Kragen 64 weist eine Nut 66 mit eingelegter Dichtung 80 auf, so dass der Einsatz 62 in seinem in das Gehäuse 60 eingesetzten Zustand den ersten Raum 26 abdichtet. Über eine weitere Dichtung 82 wird der zweite Raum 30 gegen die Innenwand 84 des zweiten Raums abgedichtet. Die zylindrische Wand 40 endet an ihrem dem Kragen 64 abgewandten Ende mit einem gestuften Bereich 68. Da sich im Betrieb der Luftaufbereitungsanlage das abgeschiedene Öl im Bereich dieser gestuften Ausbildung ansammelt, hat diese die Wirkung, ein Hochkriechen des Öls an der zylindrischen Wand 40 zu verhindern. Für den Übertritt der Druckluft aus dem ersten Raum 26 in den zweiten Raum 30 sind Rohre 46 vorgesehen, die an ihrem äußeren Umfang kragenartige Fortsätze 48 aufweisen. Die Fortsätze 48 sind auch zu dem Zweck vorgesehen, ein Kriechen von Öl entlang des Außenumfangs der Rohre 46 zu verhindern und so letztlich einen Ölübertritt in den zweiten Raum 30 zu unterbinden. Die Luftleitmittel 28 sind als mehrere identisch ausgebildete Luftleitelemente 32 realisiert. Der Innendurchmesser der Luftleitelemente 32 entspricht im Wesentlichen dem Außendurchmesser der zylindrischen Wand 40, so dass die Luftleitelemente 32 form- und/oder kraftschlüssig auf den Einsatz 26 aufgesetzt werden können. Mit jedem Luftleitelement 32 ist eine Hauptebene 34 definiert. Von dieser Hauptebene 34 erstrecken sich Luftführungsabschnitte 36 abwechselnd in unterschiedliche axiale Richtungen, wobei diese Luftführungsabschnitte vorzugsweise einen Winkel von ca. 15 Grad mit der Hauptebene 34 einschließen. Die Luftleitelemente 32 sind zwar identisch aufgebaut, jedoch werden sie in "verdrehter" Weise auf den Einsatz 62 aufgesetzt. Hierdurch liegen für die durch den ersten Raum 26 strömende Luft unterschiedliche Strömungsquerschnitte vor, woraus variierende Geschwindigkeiten resultieren. Diese variierenden Geschwindigkeiten begünstigen ein Zusammenlagern der Verschmutzungen, so dass deren Transport an die innere Wand des Gehäuses 60 aufgrund der Zentrifugalkraft begünstigt wird. Die Luftleitelemente 32 können in einfacher Weise hergestellt werden, beispielsweise durch einen Stanzvorgang und einen nachfolgenden Biegevorgang, wobei diese Prozesse bei geeignetem Werkzeug auch in einen einzigen Arbeitsschritt vereinigt sein können.

Die Integration des Ölabscheiders in die Luftaufbereitungsanlage kann durch lösbare oder unlösbare Verbindungen des Ölabscheiders mit dem Ventilgehäuse und der Filtereinheit realisiert sein. Ebenfalls ist es möglich, für den Ölabscheider und die Ventileinheit und/oder die Filtereinheit ein gemeinsames Gehäuse vorzusehen.

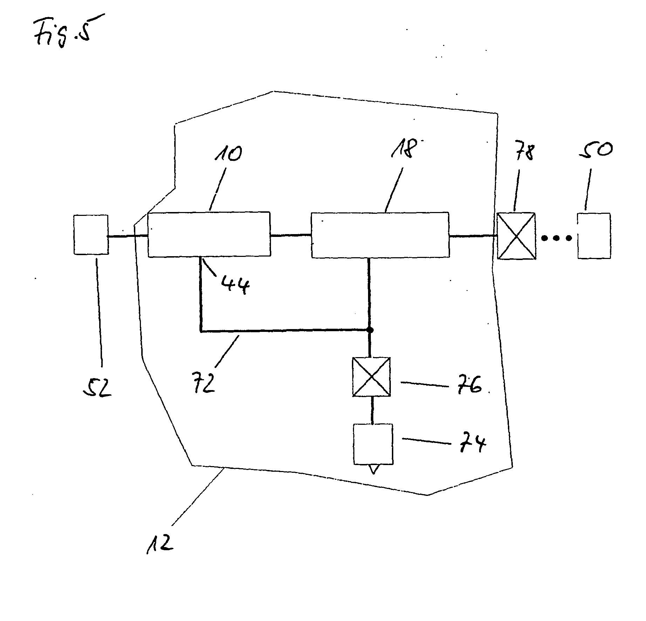

Figur 5 zeigt eine schematische Darstellung einer erfindungsgemäßen Druckluftversorgungsanlage. In die erfindungsgemäße Luftaufbereitungsanlage 12 ist ein Ölabscheider 10 integriert. Der Luftaufbereitungsanlage 12 wird aus einer Druckluftquelle 52 über den Ölabscheider 10 Druckluft zugeführt. Die gereinigte und getrocknete Druckluft kann dann Druckluftverbrauchern 50 zugeführt werden. Um in dem Ölabscheider 10 angesammelte Verschmutzungen aus dem Ölabscheider 10 zu entnehmen, ist eine Leitung 72 vorgesehen, über die der Ablass 44 des Ölabscheiders 10 mit einer Entlüftung 74 der Luftaufbereitungsanlage 12 gekoppelt ist. Die Kopplung erfolgt über ein Ventil 76, was beispielsweise als 2/2-Ventil ausgelegt sein kann. Zur Entnahme der Verschmutzungen aus dem Ölabscheider 12 wird ein in der Verbraucherleitung angeordnetes Ventil 78, das ebenfalls als 2/2-Ventil ausgelegt sein kann, geschlossen. Dieses Ventil 78 kann auch innerhalb der Luftaufbereitungsanlage 12 angeordnet sein. Das Ventil 76 kann dann geöffnet werden, so dass durch die von der Druckluftquelle 52 gelieferte Druckluft die Verschmutzungen aus dem Ölabscheider über die Entlüftung 74 ausgestoßen werden können. Diese Entlüftung 74 ist vorzugsweise dieselbe Entlüftung, die auch zum Zwecke der Regeneration der Filtereinheit 18 verwendet wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Ölabscheider
- 12: Luftaufbereitungsanlage
- 14: Ventilgehäuse
- 18: Filtereinheit
- 20: Eingangsanschluss
- 22: Ausgangsanschluss
- 24: Sicherheitsventil
- 26: erster Raum
- 28: Luftleitmittel
- 30: zweiter Raum
- 32: Luftleitelement
- 34: Hauptebene
- 36: Luftführungsabschnitt
- 38: Luftführungsabschnitt
- 40: zylindrische Wand
- 42: Bodenbereich
- 44: Ablass
- 46: Rohr
- 48: Fortsatz
- 50: Druckluftverbraucher
- 52: Druckluftquelle
- 56: Auslassöffnung
- 58: Strömungspfad
- 60: Gehäuse
- 62: Einsatz
- 64: Kragen
- 66: Nut
- 68: gestufter Bereich
- 70: Kühlrippen
- 72: Leitung
- 74: Entlüftung
- 76: Ventil
- 78: Ventil
- 80: Dichtung
- 82: Dichtung
- 84: Innenwand

## Patentansprüche

1. Luftaufbereitungsanlage (12) mit einem Ölabscheider (10), wobei
- der Ölabscheider (10) einen ersten Raum (26) und einen zweiten Raum (30) aufweist, die als im Wesentlichen axialsymmetrische Ringräume mit gemeinsamer Achse ausgelegt sind,
- in den ersten Raum zu reinigende Druckluft einleitbar ist, wobei in dem ersten Raum Luftleitmittel (28) angeordnet sind, durch die die Strömungsgeschwindigkeit der durchströmenden Luft änderbar ist,
- dem zweiten Raum in dem ersten Raum gereinigte Luft zuführbar ist, wobei über den zweiten Raum die gereinigte Luft einer Filtereinheit (18) zuführbar ist, und
- der erste Raum (26) und der zweite Raum (30) einen zentralen Strömungspfad (58) für eine Strömung getrockneter Druckluft von einer Filtereinheit (18) zu Druckluftverbrauchern (50) umschließen.

2. Luftaufbereitungsanlage nach Anspruch 1, **dadurch gekennzeichnet, dass** die Druckluft dem ersten Raum (26) mit tangentialer Komponente zuführbar ist.

3. Luftaufbereitungsanlage nach Anspruch 1 oder 2, **dadurch gekennzeichnet,**
- **dass** die Luftleitmittel (28) mehrere Luftleitelemente (32) aufweisen, deren Hauptebenen (34) an verschiedenen Axialkoordinaten angeordnet sind,
- **dass** die Luftleitelemente Luftführungsabschnitte (36, 38) aufweisen, die sich aus deren jeweiliger Hauptebene (34) heraus erstrecken, und
- **dass** benachbarte Luftführungsabschnitte (36 38) benachbarter Luftleitelemente (32) nicht parallel sind.

4. Luftaufbereitungsanlage nach Anspruch 3, **dadurch gekennzeichnet, dass** der Winkel zwischen Luftführungsabschnitten (36, 38) und Hauptebenen (34) zwischen 10 und 20 Grad, vorzugsweise 15 Grad beträgt.

5. Luftaufbereitungsanlage nach Anspruch 3 oder 4, **dadurch gekennzeichnet, dass** die Luftleitelemente (32) zumindest teilweise identisch ausgebildet sind, wobei die Nichtparallelität der Luftführungsabschnitte (36, 38) benachbarter Luftleitelemente (32) durch eine relative Verdrehung der Luftleitelemente gegeneinander realisiert ist.

6. Luftaufbereitungsanlage nach einem der Ansprüche 3 bis 5, **dadurch gekennzeichnet, dass** der Innendurchmesser der Luftleitelemente (32) dem Außendurchmesser einer im Wesentlichen zylindrischen Wand (40) entspricht, die den ersten Raum (26) von dem zweiten Raum (30) trennt.

7. Luftaufbereitungsanlage nach einem der vorangehenden Ansprüche, **dadurch gekennzeichnet, dass** der erste Raum (26) einen Bodenbereich (42) aufweist, in dem abgeschiedenes Öl gesammelt wird und an dem ein Ablass (44) zur Entnahme des gesammelten Öls angeordnet ist.

8. Luftaufbereitungsanlage nach Anspruch 6 oder 7, **dadurch gekennzeichnet, dass** die im Wesentlichen zylindrische Wand (40) im Bodenbereich (42) des ersten Raums (26) gestuft ausgebildet ist.

9. Luftaufbereitungsanlage nach einem der vorangehenden Ansprüche, **dadurch gekennzeichnet, dass** der Übergang zwischen dem ersten Raum (26) und dem zweiten Raum (30) durch mindestens ein in den ersten Raum hineinragendes Rohr (46) gebildet ist, das an seiner Außenseite mindestens einen kragenartigen Fortsatz (48) hat.

10. Druckluftversorgungsanlage mit einer Luftaufbereitungsanlage (12) nach einem der vorangehenden Ansprüche.

11. Druckluftversorgungsanlage nach Anspruch 10, **dadurch gekennzeichnet, dass** der Ölabscheider einen Ablass (44) aufweist, der zum Abführen von abgeschiedenen Substanzen mit einer im Zusammenhang mit einer Regeneration einer Filtereinheit verwendeten Ablassöffnung der Luftaufbereitungsanlage gekoppelt ist.

## Claims

1. Air preparation unit (12) with an oil separator (10), wherein
- the oil separator (10) comprises a first chamber (26) and a second chamber (30), which are designed as substantially axially symmetrical annular spaces with a common axis,
- compressed air to be purified can be introduced into the first chamber, wherein the first chamber includes air baffle means (28), whereby the flow velocity of the air passing through can be altered,
- the second chamber can be supplied with air purified in the first chamber, wherein the purified air can be fed to a filter unit (18) via the second chamber, and
- the first chamber (26) and the second chamber (30) enclose a central flow path (58) for a flow of dry compressed air from a filter unit (18) to the compressed air user.

2. Air preparation unit according to claim 1, **characterised in that** the compressed air can be fed into the first chamber (26) with a tangential component.

3. Air preparation unit according to claim 1 or 2, **characterised in that**
- the air baffle means (28) comprise a plurality of air baffle elements (32), the main planes (34) of which are located on different axial co-ordinates,
- the air baffle elements comprise air guidance sections (36, 38) extending from their main planes, and
- adjacent air guidance sections (36, 38) of adjacent air baffle elements (32) are not parallel.

4. Air preparation unit according to claim 3, **characterised in that** the angle between the air guidance sections (36, 38) and the main planes (34) is between 10 and 20 degrees, preferably 15 degrees.

5. Air preparation unit according to claim 3 or 4, **characterised in that** the air baffle elements (32) are at least partially identical, the non-parallelism of the air guidance sections (36, 38) of adjacent air baffle elements (32) being obtained by twisting the air baffle elements relative to one another.

6. Air preparation unit according to any of claims 3 to 5, **characterised in that** the inner diameter of the air baffle elements (32) is equal to the outer diameter of a substantially cylindrical wall (40) separating the first chamber (26) from the second chamber (30).

7. Air preparation unit according to any of the preceding claims, **characterised in that** the first chamber (26) has a base region (42), in which separated oil is collected and on which an outlet (44) for the removal of the collected oil is provided.

8. Air preparation unit according to claim 6 or 7, **characterised in that** the substantially cylindrical wall (40) is stepped in the base region (42) of the first chamber (26).

9. Air preparation unit according to any of the preceding claims, **characterised in that** the transition between the first chamber (26) and the second chamber (30) is represented by at least one pipe (46) projecting into the first chamber and having at least one collar-type extension (48) on its outside.

10. Compressed air supply unit with an air preparation unit (12) according to any of the preceding claims.

11. Compressed air supply unit according to claim 10, **characterised in that** the oil separator has an outlet (44), which, for the removal of separated substances, is coupled to an outlet port of the air preparation unit used in the context of a regeneration of a filter unit.

## Revendications

1. Installation (12) de traitement de l'air comprenant un séparateur (10) d'huile, dans laquelle
- le séparateur (10) d'huile a une première chambre (26) et une deuxième chambre (30) qui sont conçues sous la forme de chambres annulaires sensiblement à symétrie axiale ayant un axe commun,
- de l'air comprimé à épurer peut être introduit dans la première chambre, des moyens (28) de conduite de l'air, par lesquels la vitesse d'écoulement de l'air qui passe peut être modifiée, étant disposés dans la première chambre,
- de l'air épuré dans la première chambre peut être envoyé à la deuxième chambre, l'air épuré passant dans la deuxième chambre pouvant être envoyé à une unité (18) de filtration, et
- la première chambre (26) et la deuxième chambre (30) entourent un trajet (58) central d'écoulement pour un écoulement d'air comprimé séché d'une unité (18) de filtration à des consommateurs (50) d'air comprimé.

2. Installation de traitement de l'air suivant la revendication 1, **caractérisée en ce que** l'air comprimé de la première chambre (26) peut être envoyé en ayant une composante tangentielle.

3. Installation de traitement de l'air suivant la revendication 1 ou 2, **caractérisée**
- **en ce que** les moyens (28) de conduite de l'air ont plusieurs éléments (32) de conduite de l'air dont les plans (34) principaux sont disposés sur des coordonnées axiales différents,
- **en ce que** les éléments de conduite de l'air ont des parties (36, 38) de guidage de l'air qui s'étendent à partir de leurs plans (34) principaux respectifs, et
- **en ce que** des parties (36, 38) de guidage d'air qui sont voisines d'éléments (32) de conduite d'air voisins ne sont pas parallèles.

4. Installation de traitement de l'air suivant la revendication 3, **caractérisée en ce que** l'angle entre des parties (36, 38) de guidage de l'air et des plans (34) principaux est compris entre 10 et 20 degrés, en étant de préférence de 15 degrés.

5. Installation de traitement de l'air suivant la revendication 3 ou 4, **caractérisée en ce que** les éléments (32) de conduite de l'air sont au moins en partie de constitution identique, l'absence de parallélisme des parties (36, 38) de guidage de l'air d'éléments (32) de conduite de l'air voisins étant réalisée par une rotation relative des éléments de conduite de l'air les uns par rapport aux autres.

6. Installation de traitement de l'air suivant l'une des revendications 3 à 5, **caractérisée en ce que** le diamètre intérieur des éléments (32) de conduite de l'air correspond au diamètre extérieur d'une paroi (40) cylindre sensiblement cylindrique qui sépare la première chambre (26) de la deuxième chambre (30).

7. Installation de traitement de l'air suivant l'une des revendications précédentes, **caractérisée en ce que** la première chambre (26) a une partie (42) de fond dans laquelle s'accumule de l'huile déposée et sur laquelle est disposée une sortie (44) pour prélever l'huile accumulée.

8. Installation de traitement de l'air suivant la revendication 6 ou 7, **caractérisée en ce que** la paroi (40) sensiblement cylindrique est constituée de manière étagée dans la partie (42) de fond de la première chambre (26).

9. Installation de traitement de l'air suivant l'une des revendications précédentes, **caractérisée en ce que** la transition entre la première chambre (26) et la deuxième chambre (30) est formée par au moins un tuyau (46) pénétrant dans la première chambre et qui a sur son côté extérieur au moins un prolongement (48) en forme de collet.

10. Installation d'alimentation en air comprimé comprenant une installation (12) de traitement de l'air comprimé suivant l'une des revendications précédentes.

11. Installation d'alimentation en air comprimé suivant la revendication 10, **caractérisée en ce que** le séparateur d'huile a une sortie (44) qui, pour évacuer des substances déposées, est couplé à une ouverture de sortie de l'installation de traitement de l'air, ouverture qui est utilisée en relation avec une régénération d'une unité de filtration.
